# EUROPÄISCHE PATENTSCHRIFT

(11) **EP 1 249 389 B1**
(45) Veröffentlichungstag und Bekanntmachung des Hinweises auf die Patenterteilung: **31.05.2006**
(21) Anmeldenummer: 02007796.2
(22) Anmeldetag: 06.04.2002
(51) Int. Cl.: B62M 11/16

(54) **Betätigungsmechanik zum Schalten einer Mehrgangfahrradnabe**
Actuating mechanism for a multispeed hub shifter
Mécanisme d'actionnement pour un moyeu à plusieurs vitesses

(30) Priorität: 14.04.2001 DE 10118645
(43) Veröffentlichungstag der Anmeldung: 16.10.2002
(73) Patentinhaber: SRAM Deutschland GmbH, 97404 Schweinfurt (DE)
(72) Erfinder: Steuer, Werner, 97424 Schweinfurt (DE)

(56) Entgegenhaltungen:
- EP-A- 0 383 350
- EP-A- 0 658 475
- EP-A- 0 834 685
- CH-A- 246 165
- DE-A- 2 458 871
- GB-A- 2 249 364
- US-A- 2 854 108
- US-A- 5 322 487
- US-A- 5 863 270

## Beschreibung

Die vorliegende Erfindung betrifft eine Vorrichtung zur rotatorischen Einleitung und anschließenden Übertragung der Schaltbewegung in ein Fahrradgetriebe, vorzugsweise in ein Nabengetriebe gemäß dem Oberbegriff des Hauptanspruches.

Die Mehrgangnabe besteht aus mindestens einem Planetengetriebesatz, der um eine feststehende Achse angeordnet ist. Das Drehmoment wird über das Ritzel auf den Antreiber und weiter über einen von mehreren Getriebepfaden des Planetengetriebes auf das Nabengehäuse übertragen. Die selektive Ansteuerung des entsprechenden Getriebepfades erfolgt über Getriebebauteile, die relativ zur Achse zu verdrehen oder zu verschieben sind. Die Gangwahl erfolgt über einen Schalter im Lenkerbereich und wird mechanisch über Seilzug oder bewegungslos z. B. elektrisch zur Mehrgangnabe weitergeleitet. Mittels einer Achsschalteinrichtung, die z. B. stirnseitig auf der Nabenachse angeordnet ist, wird die dem gewählten Gang entsprechende axiale Schaltbewegung in das Nabeninnere eingeleitet. Bei bewegungsloser Schaltübertragung erfolgt die mechanische Umsetzung des Schaltsignals über einen Aktuator, die so erzeugte Schaltbewegung wird dann in die Nabe eingeleitet.

Schaltbewegungen können linear z. B. mittels Schub- oder Zugelemente oder rotatorisch in die Nabe eingeleitet werden. Der Schaltvorgang wird generell von außen über bzw. durch ein stehendes Bauteil ins Nabeninnere geführt.

Die lineare Einleitung der Schaltbewegung in die Getriebenabe erfolgt, wie in der EP 0 350 791 gezeigt, über die Achsschalteinrichtung durch die hohle Nabenachse. Deshalb sitzt die Achsschalteinrichtung auch am Ende der Nabenachse und vergrößert dadurch den axialen Bauraum. Dieser axiale Aufbau wird mitunter als störend empfunden und sollte möglichst minimiert werden bzw. ganz entfallen.

Die rotatorische Einleitung der Schaltbewegung in die Nabe erfolgt koaxial zur Nabenachse, in aller Regel außerhalb der Nabenachse. Die Drehbewegung wird entweder über ein beidseitig gelagertes, rotierendes Bauteil oder mittels einer drehbaren Hülse, die mit Fingern axial durch Fenster in einem Festkonus hindurch greift, in das Nabeninnere geleitet.

In der DE 2458871 wird die lineare Schaltzugbewegung mittels einer Seilspule in eine Drehbewegung umgeformt und zwischen zwei Wälzlager hindurch, koaxial ins Nabeninnere übertragen. Diese rotatorische Einleitung und Übertragung der Schaltbewegung ist sehr aufwendig, da das rotierende Bauteil im Kraftfluß zwischen Nabenhülse und Nabenachse liegt und alle Lagerkräfte sowie die Kräfte, die aus der Bremsbetätigung resultieren, übertragen muß.

In der EP 0 383 350 wird die Drehbewegung der Seilspule durch Fenster im Festkonus der Antreiberlagerung hindurch ins Nabeninnere geleitet. Diese Übertragungsvariante ermöglicht nur einen begrenzten Drehwinkel des rotatorischen Betätigungsteiles, wodurch der Schaltweg bzw. Schaltwinkel pro Gangstufe ungünstig eingeschränkt wird. Dies führt zu ungünstigen Übertragungsverhältnissen, z. B. werden große Steigungswinkel an den Steigflächen zur Weiterleitung der Schaltbewegung benötigt.

Die in der US 2 854 108 gezeigte Durchführung der Schaltbewegung zwischen der Lagerung und der Achse erfolgt über den Innenring, der zusätzlich entweder mittels eines Gleit- oder Wälzlagers auf der Achse gelagert ist. Dies bedeutet einen erheblichen Mehraufwand gegenüber einer Lösung, die eine Übertragung der Schaltbewegung unter einem freitragenden, von einem festen Trägerteil fixierten, Innenring ermöglicht.

In der EP 0658475 ist eine Betätigungsmechanik zum Schalten einer Mehrgangnabe gemäß dem Oberbegriff von Anspruch 1 offenbart.

Dort ist ein Konus gezeigt, der sich direkt auf der Nabenachse abstützt und Fenster an seinem der Nabenachse zugewandten Innenumfang aufweist. Die Drehbewegung eines Steuerringes wird durch die Fenster im Konus ins Nabeninnere übertragen. Der Steuerring wird durch einen Betätigungsseilzug um die Nabenachse verdreht.

Aufgabe der Erfindung ist es, gemäß dem Gattungsbegriff, eine einfache Vorrichtung zur Einleitung der Schaltbewegung in das Nabengetriebe zu schaffen. Es sollen die Nachteile der bekannten Lösungen vermieden werden, wie z. B. Verlängerung der axialen Breite durch eine Achsschalteinrichtung oder aufwendige Durchführung durch gelagerte Bauteile sowie Einschränkung der Drehwinkel bei rotatorischer Übertragung durch Fensterabschnitte mit funktionsbedingt vorgegebenen Abmessungen.

Die Erfindung zeigt nun eine andere Ausgestaltung der Einleitungs- und Übertragungsvorrichtung der Schaltbewegung in ein Fahrradgetriebe. Hierbei wird die Schaltbewegung rotatorisch ohne Drehwinkeleinschränkung oder linear durch ein achsfestes Bauteil hindurch in die Getriebenabe eingeleitet. Die Umformung der rotatorischen Bewegung in eine zum Ansteuern des jeweiligen Gangpfades im Planetengetriebe erforderliche lineare Bewegung erfolgt, entweder auf der dem Planetensatz, oder der Seilspule zugewendeten Seite der Übertragungshülse.

Die erfindungsgemäße Lösung der Aufgabe ist im kennzeichnenden Teil des Hauptanspruches beschrieben. Weitere vorteilhafte Ausgestaltungen der Erfindung sind dem Nebenanspruch und den Unteransprüchen zu entnehmen.

Erfindungsgemäß wird vorgeschlagen, die Schaltbewegung unterhalb des Festkonus, der als Innenring für die Lagerung des Antreibers fungiert, in die Nabe einzuleiten. Dazu wird der Festkonus bzw. Innenring so mit einem achsfesten Trägerteil verbunden, dass zwischen Festkonus und Achse ein Ringspalt entsteht, durch den ein Übertragungselement, z. B. eine Übertragungshülse oder ein Übertragungsgestänge ins Nabeninnere geführt wird. Die Übertragungshülse steht zum einen direkt oder indirekt mit der Seilspule und zum anderen mit einer Gangwechseleinrichtung in der Getriebenabe in Wirkverbindung.

Soll die Übertragungshülse eine rotatorische Schaltbewegung weiterleiten, so wird sie im Bereich des Festkonus über die Seilspule oder von einem Zahnrad bzw. Zahnstange mit einer Drehbewegung beaufschlagt.

Soll die Übertragungshülse eine lineare Schaltbewegung weiterleiten, so wird die Drehbewegung der Seilspule an der Berührungsfläche zur Übertragungshülse in eine lineare Bewegung umgeformt. Hierzu verfügt die Seilspule über axial verlaufende Nocken oder Konturen im Bereich des Festkonus bzw. des Seilspuleninnendurchmessers, die in Wirkverbindung mit der entsprechenden Stirnfläche der Übertragungshülse stehen. Wird beim Verdrehen der Seilspule die axial verschiebbare Übertragungshülse am Mitdrehen gehindert, so kommt es zur linearen Bewegung der Übertragungshülse. Mittels der Übertragungshülse wird die Schaltbewegung durch den Ringspalt zwischen Lagerinnenring und Achse an die Gangwechseleinrichtung in der Nabe weitergeleitet.

Das achsfeste Trägerteil, das den Innenring radial sowie axial fixiert und die Lagerkräfte aufnimmt, ist gleichzeitig das Gehäuse für die Seilspule. Lagerinnenring und Trägerteil können ein gemeinsames Bauteil bilden bzw. aus dem gleichen Material bestehen. Am Umfang des Trägerteils befindet sich eine Öffnung für den Schaltzug der in die Seilspule eingehängt werden kann. Es können auch zwei gegenläufig fungierende Seilzüge oder ein steifes Schaltübertragungsmittel z. B. ein geführter Draht verwendet werden, die in Vorrichtungen an der Seilspule eingehängt und auf entsprechende Rillen am Seilspulenumfang gewickelt werden. Die Seilspule dreht um die Nabenachse und hat seitlich eine in Achsnähe befindliche Anlauffläche zum Abstützen der auftretenden axialen Schaltkräfte am Trägerteil. Zur Reibungsreduzierung kann auch eine Anlaufscheibe zwischen Seilspule und Trägerteil angeordnet werden.

Die Seilspule ist mit einer Rückstellfeder ausgestattet, die sich entweder am Trägerteil oder an der Achse abstützt, und bei nachlassender Spannung eines einkabeligen Schaltzuges oder Schaltdrahtes das Nabengetriebe immer in Richtung einer vorgegebenen Position oder in die Ausgangslage zurückstellt. Als Rückstellfeder fungiert vorzugsweise eine Spiral- oder Schenkelfeder. Es ist auch vorgesehen, dass im Fall einer Demontage des Schaltzuges die Seilspule oder andere rotatorische Betätigungsteile, z. B. ein Zahnradgetriebe mittels Federvorspannung in die Ausgangslage zurückgedreht werden.

Die Seilspule kann auch über ein vorgespanntes, federndes Koppelglied, z. B. in Form einer Spiralfeder mit der Übertragungshülse verbunden werden. Falls das Getriebe im Augenblick des geplanten Schaltvorganges nicht schaltbar ist, werden über die Seilspule eingeleitete Schaltvorgänge von der Feder solange zwischengespeichert, bis sich wieder eine schaltbare Getriebestellung einstellt.

Gemäß einer weiteren Ausgestaltung der Erfindung kann die rotatorische Übertragung der Schaltbewegung auch mittels Zahnrädern oder einer vorzugsweise flexiblen Zahnstange auf die Übertragungshülse erfolgen. So greift ein Antriebszahnrad oder eine Zahnstange in ein Abtriebszahnrad an der Übertragungshülse ein. Der Antrieb erfolgt elektromotorisch oder mechanisch über Schaltzug und Seilspule.

### Kurzbeschreibung der Zeichnungen

Anhand von vier Figuren werden Ausführungsbeispiele zur weiteren Erläuterung der Erfindungsmerkmale gezeigt:
- Fig. 1: zeigt eine Schnittdarstellung der Schaltbetätigungsmechanik
- Fig. 2: zeigt die Federkopplung zwischen Seilspule und Übertragungshülse
- Fig. 3: zeigt die Anordnung einer Rückstellfeder
- Fig. 4: zeigt die Schaltübertragung mittels Zahnräder und Übertragungshülse

### Beschreibung eines bevorzugten Ausführungsbeispiels

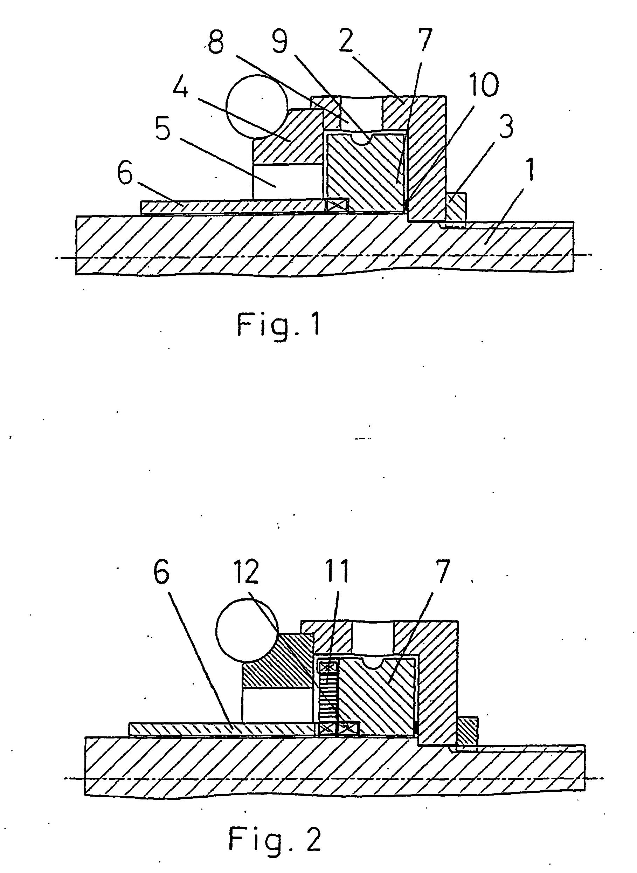

In Fig.1 wird ein Ausschnitt einer Getriebenabe mit der Schaltbetätigungsmechanik gezeigt. Auf der Achse 1 wird das Trägerteil 2 mit einer Achsmutter 3 axial fixiert. Das Trägerteil 2 nimmt den Innenring 4 eines Wälzlagers am Außendurchmesser auf. Trägerteil 2 und Innenring 4 können auch ein gemeinsames Bauteil bilden oder sogar einteilig ausgebildet sein. Der Innendurchmesser des Innenringes 4 ist größer als der Achsdurchmesser und bildet somit eine Ringöffnung 5 zur Durchführung einer Übertragungshülse 6. Die Aufnahme des Innenringes 4 am Außendurchmesser ergibt einen freien Innendurchmesser des Innenringes 4 und damit einen möglichst kleinen Lagerdurchmesser, was sich positiv auf Wälzlagerkosten und Bauraum auswirkt. Das Trägerteil 2 bildet ein Gehäuse zur Aufnahme der Seilspule 7 und besitzt am Außendurchmesser eine Schaltzugöffnung 8 zur Durchführung eines Schaltzuges, der von der Seilrille 9 am Außendurchmesser der Seilspule 7 aufgenommen wird. Die Übertragungshülse 6 ist drehfest mit der Seilspule 7 verbunden, bzw. bildet mit der Seilspule 7 ein gemeinsames Bauteil. Die Weiterleitung der Schaltbewegung kann auch mit einem Gestänge, koaxial zur Achse erfolgen. Die auftretenden axialen Schaltkräfte werden am Trägerteil 2 abgestützt. Zur Reibungsverminderung kann im Bereich des Innendurchmessers der Seilspule 7 eine axial erhabene Anlauffläche vorgesehen sein oder zwischen Seilspule 7 und Trägerteil 2 eine Anlaufscheibe 10 aus Gleitmaterial angeordnet werden. Die freitragende Anordnung des Innenringes 4 ermöglicht eine freie Ringöffnung 5 zur uneingeschränkten Weiterleitung der Schaltbewegung, insbesondere einer rotatorischen Schaltbewegung.

Fig. 2 zeigt die Schaltbetätigungsmechanik wie in Figur 1, jedoch mit einer Federkopplung 11 zwischen Seilspule 7 und Übertragungshülse 6 . Diese Federkopplung 11 in Form einer Spiral- oder Schenkelfeder stützt sich innen an der Übertragungshülse' 6 und außen an der Seilspule 7 ab und ist entsprechend vorgespannt, was durch einen Verdrehanschlag 12 in der Seilspule 7 realisiert wird. Kann die Schaltbewegung wegen einer ungünstigen Stellung des Getriebes nicht sofort weitergeleitet werden, so wird die bereits vorgespannte Feder der Federkopplung 11 zusätzlich gespannt und speichert so den Schaltvorgang bzw. die Schaltarbeit. Ergibt sich eine günstigere, schaltbare Stellung des Getriebes, so leitet die vorgespannte Federkopplung 11 umgehend den in Aufziehrichtung vorgesehenen Schaltvorgang ein und verdreht die Übertragungshülse 6.

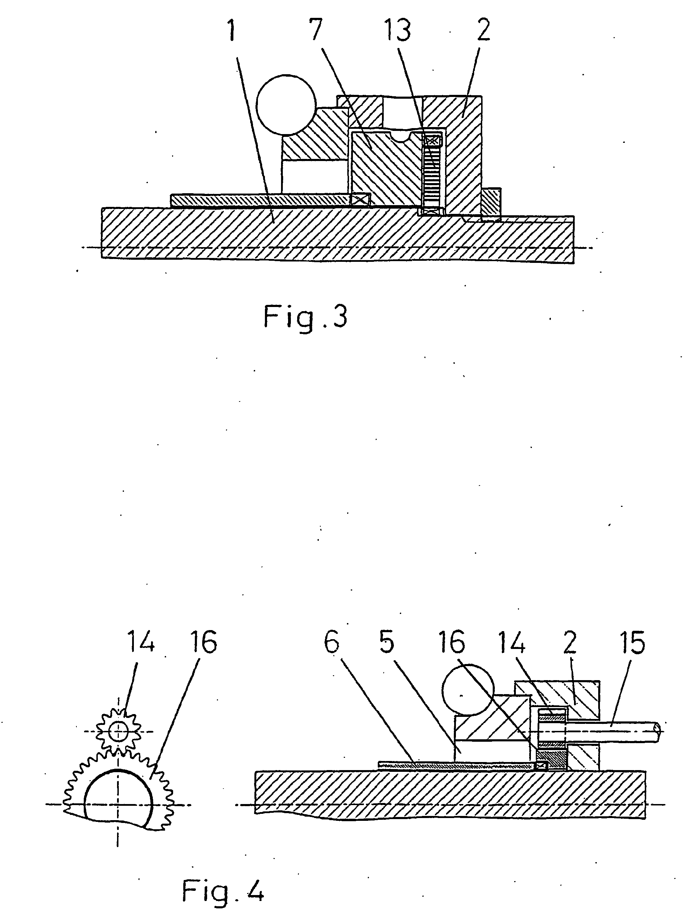

In Fig. 3 ist die Schaltbetätigungsmechanik mit einer Rückstellfeder 13 ausgestattet. Diese Rückstellfeder 13 ist zum einen drehfest an der Seilspule 7 und zum andem entweder, wie hier gezeigt, an der Achse 1 oder am Trägerteil 2 befestigt. Es ist zweckmäßig, auch die Rückstellfeder 13 vorzuspannen und den Drehbereich der Seilspule 7 einzuschränken, damit die Seilspule 7 bei nachlassender Seilspannung oder bei ausgehängtem Schaltzug in eine definierte Ausgangslage gebracht wird. Zudem ermöglicht die Rückstellfeder 13 eine Speicherung des Schaltvorganges in Abwickelrichtung, wenn eventuell gerade keine Schaltbereitschaft des Getriebes vorliegt.

In einer bevorzugten Ausführung der Erfindung ist sowohl eine Federkopplung zwischen Seilspule und Übertragungshülse, als auch eine Rückstellfeder zwischen Seilspule und Achse bzw. Trägerteil vorgesehen. Somit können sowohl Schaltvorgänge in Aufwickel- als auch in Abwickelrichtung gespeichert werden. Beide Federn können seitlich in der Außenkontur der Seilspule integriert sein.

In Fig. 4 wird die Schaltübertragung mittels Zahnrädern gezeigt. Ein Antriebszahnrad 14 wird z. B. von der Seilspule oder von einer motorisch angetriebenen Welle 15, die seitlich durch das Trägerteil 2 geführt wird, dem Schaltweg entsprechend gedreht. Die Drehbewegung wird an ein Abtriebszahnrad 16 übertragen, das mit der Übertragungshülse 6 drehfest verbunden ist. Diese erfinderische Schaltbetätigungsmechanik ermöglicht die Nutzung der Zahnradübersetzung. So wird ein großer Verdrehwinkel mit entsprechend geringer Schaltkraft am Antriebszahnrad 14 mittels Abtriebszahnrad 16 in einen kleinen Verdrehwinkel mit großer Schaltkraft umgewandelt und von der Übertragungshülse 6 durch die Ringöffnung 5 ins Nabeninnere weitergeleitet.

### Bezugszeichenliste

- 1: Achse
- 2: Trägerteil
- 3: Achsmutter
- 4: Innenring
- 5: Ringöffnung
- 6: Übertragungshülse
- 7: Seilspule
- 8: Schaltzugöffnung
- 9: Seilrille
- 10: Anlaufscheibe
- 11: Federkopplung
- 12: Verdrehanschlag
- 13: Rückstellfeder
- 14: Antriebszahnrad
- 15: Welle
- 16: Abtriebszahnrad

## Patentansprüche

1. Eine auf einer Achse (1) einer Mehrgangnabe anordenbare Betätigungsmechanik zum Schaltender Mehrganggetriebenabe,
bestehend aus
einem Wälzlager, wobei im montierten Zustand der Betätigungsmechanik ein freier Ringspalt (5) zwischen einem Innenring (4) des Wälzlagers und der Achse (1) vorhanden ist,
einer Übertragungshülse (6) zum Einleiten einer Schaltbewegung in die Mehrganggetriebenabe und
einem auf der Achse (1) der Mehrganggetriebenabe radial und axial festlegbaren Trägerteil (2);
wobei das Trägerteil (2) ferner eine Öffnung aufweist, durch die ein anderes mechanisches Bauteil z. B. ein Seilzug oder eine Welle (15) hindurchgeführt werden kann, um so die Übertragungshülse (6) zu schalten;
**dadurch gekennzeichnet,**
**dass** der Innenring des Wälzlagers (4) von dem Trägerteil (2) axial fixiert und ausschließlich von dem Trägerteil (2) radial gehalten wird und sich auf diese Weise im montierten Zustand gegenüber der Achse (1) abstützt,
wodurch der freie Ringspalt (5) zwischen der Achse (1) und dem Innenring (4) des Wälzlagers für die Anordnung von weiteren Elementen der Betätigungsmechanik, z. B. der Übertragungshülse, zur Verfügung steht und nicht für die Abstützung des Innenringes (4) des Wälzlagers benötigt wird.

2. Betätigungsmechanik nach Anspruch 1,
**dadurch gekennzeichnet,**
**dass** der Innenring (4) des Wälzlagers als Lagerkonus ausgebildet ist.

3. Betätigungsmechanik nach Anspruch 1,
**dadurch gekennzeichnet,**
**dass** das Trägerteil(2) als Gehäuse, zur Aufnahme eines rotatorischen Betätigungsteils, in Form einer Seilspule (7) oder eines Zahnradgetriebes, bestehend aus mindestens einem Antriebszahnrad (14) und einem Abtriebszahnrad (16), ausgebildet ist.

4. Betätigungsmechanik nach Anspruch 3,
**dadurch gekennzeichnet,**
**dass** die Seilspule(7) zur Aufnahme von mindestens einem Schaltzug oder einem Zug-Schub-Betätigungselement, am Umfang mit entsprechenden Sellrillen (9) sowie Aufnahme- und Einhängvorrichtungen ausgestattet ist.

5. Betätigungsmechanik nach Anspruch 3,
**dadurch gekennzeichnet,**
**dass** die Seilspule(7), zur Abstützung der auftretenden axialen Schaltkräfte am Trägerteil (2), über eine in Achsnähe befindliche Anlauffläche verfügt oder ein Gleitring bzw. eine Anlaufscheibe (10) zur Reibungsverringerung verwendet wird.

6. Betätigungsmechanik nach Anspruch 1,
**dadurch gekennzeichnet,**
**dass** am Umfang des Trägerteils (2) mindestens eine Schaltzugöffnung (8) zur Durchführung von Schaltübertragungsmitteln wie z. B. flexibler Schaltzug oder starrer Schaltdraht vorgesehen ist.

7. Betätigungsmechanik nach Anspruch 1,
**dadurch gekennzeichnet,**
**dass** am Umfang oder an der nach außen gerichteten Seitenwand des Trägerteils (2) mindestens eine, vorzugsweise koaxial verlaufende Öffnung zur Durchführung von rotierenden Schaltübertragungsmitteln, insbesondere Antriebszahnrad (14) oder Welle (15) vorgesehen ist.

8. Betätigungsmechanik nach Anspruch 3,
**dadurch gekennzeichnet,**
**dass** zur Übertragung der Schaltbewegung, insbesondere einer rotatorischen Schaltbewegung, in das Nabeninnere, das Übertragungselement, vorzugsweise eine Übertragungshülse (6) drehfest mit der Seilspule (7) verbunden ist, bzw. beide ein gemeinsames Bauteil bilden.

9. Betätigungsmechanik nach Anspruch 3,
**dadurch gekennzeichnet,**
**dass** zur Übertragung der Schaltbewegung, insbesondere einer rotatorischen Schaltbewegung, in das Nabeninnere, das Übertragungselement, vorzugsweise eine Übertragungshülse (6) drehfest mit einem Abtriebszahnrad (16) verbunden ist, das über ein Antriebszahnrad (14) oder eine, vorzugsweise flexible, Zahnstange angetrieben wird.

10. Betätigungsmechanik nach Anspruch 9,
**dadurch gekennzeichnet,**
**dass** das Antriebszahnrad (14) von einer Seilspule (7) oder durch Fremdenergie z. B. einem Elektroantrieb angetrieben wird.

11. Betätigungsmechanik nach Anspruch 8,
**dadurch gekennzeichnet,**
**dass** zur Übertragung der Schaltbewegung, insbesondere einer rotatorischen Schaltbewegung, die Seilspule (7) und die Übertragungshülse (6) mittels einer, den Schaltweg und die Schaltenergie speichernden Federkopplung (11), verbunden sind.

12. Betätigungsmechanik nach Anspruch 11,
**dadurch gekennzeichnet,**
**dass** die Federkopplung (11) aus einer Spiralfeder besteht, die bei nicht vorhandener Umschaltbereitschaft des Nabengetriebes gespannt wird.

13. Betätigungsmechanik nach Anspruch 3,
**dadurch gekennzeichnet,**
**dass** das rotatorische Betätigungsteil, insbesondere die Seilspule (7) mittels einer Rückstellfeder(13), die sich an der Achse (1) oder dem Trägerteil (2) abstützt, zurückgestellt bzw. in die Ausgangslage zurückgedreht werden kann.

14. Betätigungsmechanik nach Anspruch 13,
**dadurch gekennzeichnet,**
**dass** die Rückstellfeder(13) in die Seilspulenkontur integriert oder seitlich angeordnet ist und als Spiralfeder oder Schenkelfeder ausgebildet ist.

15. Betätigungsmechanik nach Anspruch 9,
**dadurch gekennzeichnet,**
**dass** die Drehbewegung erzeugende Zahnstange mit einer Rückholfeder ausgestattet ist, um die Übertragungshülse gegen die Betätigungsrichtung bzw. in die Ausgangslage zurückzudrehen, wobei sich die Feder am Trägerteil (2) oder der Achse (1) abstützt.

16. Betätigungsmechanik nach Anspruch 8,
**dadurch gekennzeichnet,**
**dass** das Übertragungselement bzw. die Übertragungshülse (6) direkt oder indirekt mit einer Federvorspannung beaufschlagt wird, um bei einer Demontage der Übertragungsvorrichtung diese in eine definierte Position, insbesondere in die Ausgangslage zurückzustellen.

17. Betätigungsmechanik nach Anspruch 3,
**dadurch gekennzeichnet,**
**dass** eine rotatorische Schaltbewegung an der Kontaktfläche zwischen einem drehenden Teil in Form einer Seilspule (7) oder eines Abtriebszahnrades (16) und der Übertragungshülse (6) innerhalb des Trägerteils (2) in eine Linearbewegung umgeformt wird und die lineare Schaltbewegung, durch die Ringöffnung (5) zwischen dem Innenring (4) und der Achse (1) ins Nabeninnere übertragen wird.

18. Betätigungsmechanik nach Anspruch 17,
**dadurch gekennzeichnet,**
**dass** die Übertragungshülse (6) zur Umformung der rotatorischen Schaltbewegung in eine lineare Bewegung mit axial verlaufenden Nocken oder Konturen ausgestattet ist, die in entsprechende Konturen an der Seilspule(7) oder des Abtriebszahnrades (16) eingreifen, wobei die Übertragungshülse (6) axial verschiebbar aber drehfest angeordnet ist.

## Claims

1. Actuating mechanism which can be arranged on a spindle (1) of a multispeed hub and is intended for shifting the multispeed gear hub, comprising
a rolling contact bearing, with there being a free annular gap (5) between an inner ring (4) of the rolling contact bearing and the spindle (1) in the fitted state of the actuating mechanism,
a transmission sleeve (6) for introducing a gear shifting movement into the multispeed gear hub, and
a support part (2) which can be fixed radially and axially on the spindle (1) of the multispeed gear hub;
the support part (2) furthermore having an opening through which another mechanical component, for example a cable pull or a shaft (15), can be guided in order in this way to shift the transmission sleeve (6),
**characterized in that**
the inner ring of the rolling contact bearing (4) is fixed axially by the support part (2) and is held radially exclusively by the support part (2) and in this manner is supported in relation to the spindle (1) in the fitted state, as a result of which the free annular gap (5) between the spindle (1) and the inner ring (4) of the rolling contact bearing is available for the arrangement of further elements of the actuating mechanism, for example of the transmission sleeve, and is not required for supporting the inner ring (4) of the rolling contact bearing.

2. Actuating mechanism according to Claim 1,
**characterized in that**
the inner ring (4) of the rolling contact bearing is designed as a bearing cone.

3. Actuating mechanism according to Claim 1,
**characterized in that**
the support part (2) is designed as a housing for receiving a rotatory actuating part in the form of a cable coil (7) or a gearwheel mechanism comprising at least one driving gearwheel (14) and an output gearwheel (16).

4. Actuating mechanism according to Claim 3,
**characterized in that**
the cable coil (7) is equipped on the circumference with corresponding cable grooves (9) and receiving and hooking-in devices for receiving at least one gear shift cable or a pull-push actuating element.

5. Actuating mechanism according to Claim 3,
**characterized in that**
the cable coil (7), in order to support the axial gear shifting forces which occur on the support part (2), has a thrust face situated in the vicinity of the spindle, or a sliding ring or a thrust washer (10) is used for reducing friction.

6. Actuating mechanism according to Claim 1,
**characterized in that**
at least one gear shift cable opening (8) for the guiding through of gear shift transmission means, such as, for example, a flexible gear shift cable or rigid gear shift wire, is provided on the circumference of the support part (2).

7. Actuating mechanism according to Claim 1,
**characterized in that**
at least one preferably coaxially running opening for the guiding through of rotating gear shift transmission means, in particular driving gearwheel (14) or shaft (15), is provided on the circumference or on the outwardly directed side wall of the support part (2).

8. Actuating mechanism according to Claim 3,
**characterized in that**,
in order to transmit the gear shifting movement, in particular a rotatory gear shifting movement, into the interior of the hub, the transmission element, preferably a transmission sleeve (6), is connected in a rotationally fixed manner to the cable coil (7) or both the transmission element and the cable coil form a common component.

9. Actuating mechanism according to Claim 3,
**characterized in that**,
in order to transmit the gear shifting movement, in particular a rotatory gear shifting movement, into the interior of the hub, the transmission element, preferably a transmission sleeve (6), is connected in a rotationally fixed manner to an output gearwheel (16) which is driven via a driving gearwheel (14) or a preferably flexible rack.

10. Actuating mechanism according to Claim 9,
**characterized in that**
the driving gearwheel (14) is driven by a cable coil (7) or by external power, for example an electric drive.

11. Actuating mechanism according to Claim 8,
**characterized in that**,
in order to transmit the gear shifting movement, in particular a rotatory gear shifting movement, the cable coil (7) and the transmission sleeve (6) are connected by means of a spring coupling (11) storing the gear shifting distance and the gear shifting energy.

12. Actuating mechanism according to Claim 11,
**characterized in that**
the spring coupling (11) comprises a spiral spring which is tensioned when the hub transmission is not ready for gear shifting.

13. Actuating mechanism according to Claim 3,
**characterized in that**
the rotatory actuating part, in particular the cable coil (7), can be reset or turned back into the starting position by means of a resetting spring (13) which is supported on the spindle (1) or the support part (2).

14. Actuating mechanism according to Claim 13,
**characterized in that**
the resetting spring (13) is integrated in the cable coil contour or is arranged laterally and is designed as a spiral spring or leg spring.

15. Actuating mechanism according to Claim 9,
**characterized in that**
the rack producing rotational movement is equipped with a restoring spring in order to rotate the transmission sleeve back counter to the actuating direction and into the starting position, the spring being supported on the support part (2) or the spindle (1).

16. Actuating mechanism according to Claim 8,
**characterized in that**
the transmission element or the transmission sleeve (6) is acted upon directly or indirectly by a pretensioning of the spring in order, during a removal of the transmission device, to set the latter back into a defined position, in particular into the starting position.

17. Actuating mechanism according to Claim 3,
**characterized in that**
a rotatory gear shifting movement is formed at the contact surface between a rotating part in the form of a cable coil (7) or an output gearwheel (16) and the transmission sleeve (6) within the support part (2) into a linear movement, and the linear gear shifting movement is transmitted through the annular opening (5) between the inner ring (4) and the spindle (1) into the interior of the hub.

18. Actuating mechanism according to Claim 17,
**characterized in that**
the transmission sleeve (6), in order to shape the rotatory gear shifting movement into a linear movement, is equipped with cams or contours which run axially and engage in corresponding contours on the cable coil (7) or the output gearwheel (16), the transmission sleeve (6) being arranged in an axially displaceable but rotationally fixed manner.

## Revendications

1. Mécanique d'actionnement qui peut être disposée sur l'axe (1) d'un moyeu à plusieurs rapports pour changer le rapport d'un moyeu de transmission à plusieurs rapports,
constituée de
un palier du roulement, un interstice annulaire (5) étant prévu entre une bague intérieure (4) du palier à roulement et l'axe (1) lorsque la mécanique d'actionnement est montée,
une douille de transmission (6) qui introduit un déplacement de changement de rapport dans le moyeu de la transmission à plusieurs rapports et
une pièce de support (2) qui peut être fixée dans le sens radial et dans le sens axial sur l'axe (1) du moyen de la transmission à plusieurs rapports,
la pièce de support (2) présentant en outre une ouverture par laquelle un autre composant mécanique, par exemple un câble de traction ou un arbre (15), peuvent être passés pour ainsi changer le rapport de la douille de transmission (6),
**caractérisée en ce que**
la bague intérieure du palier de roulement (4) est fixée axialement par la pièce de support (2) et est maintenue radialement exclusivement par la pièce de support (2) et de cette manière s'appuie contre l'axe (1) à l'état monté,
grâce à quoi l'interstice annulaire libre (5) entre l'axe (1) et la bague intérieure (4) du palier de roulement est disponible pour agencer d'autres éléments de la mécanique d'actionnement, par exemple la douille de transmission, et n'est pas nécessaire pour soutenir la bague intérieure (4) du palier de roulement.

2. Mécanique d'actionnement selon la revendication 1, **caractérisée en ce que** la bague intérieure (4) du palier de roulement est configurée en palier conique.

3. Mécanique d'actionnement selon la revendication 1, **caractérisée en ce que** la pièce de support (2) est configurée comme boîtier qui reçoit une pièce rotative d'actionnement qui présente la forme d'une bobine de câble (7) ou d'une transmission en roue dentée constituée d'au moins une roue dentée d'entraînement (14) et d'une roue dentée entraînée (16).

4. Mécanique d'actionnement selon la revendication 3, **caractérisée en ce que** la bobine de câble (7) est prévue pour recevoir au moins un câble de changement de rapport ou un élément d'actionnement à traction et poussée à sa périphérie par des rainures de câble (9) appropriées ainsi que par des dispositifs de réception et de suspension.

5. Mécanique d'actionnement selon la revendication 3, **caractérisée en ce que** la bobine de câble (7) est équipée d'une surface de roulement située à proximité de l'axe pour soutenir les forces axiales de changement de rapport exercées sur la pièce de support (2) ou **en ce qu'**une bague coulissante ou un disque de roulement (10) sont utilisés pour diminuer le frottement. '

6. Mécanique d'actionnement selon la revendication 1, **caractérisée en ce qu'**au moins une ouverture (8) pour le câble de changement de rapport est prévue à la périphérie de la pièce de support (2) pour faire passer des moyens de transmission du changement de rapport, par exemple un câble flexible de changement de rapport ou un fil rigide de changement de rapport.

7. Mécanique d'actionnement selon la revendication 1, **caractérisée en ce qu'**au moins une ouverture qui s'étend de préférence coaxialement est prévue sur la périphérie ou sur la paroi latérale orientée vers l'extérieur de la pièce de support (2) pour faire passer des moyens rotatifs de transmission du changement de rapport, en particulier une roue dentée d'entraînement (14) ou un arbre (15).

8. Mécanique d'actionnement selon la revendication 3, **caractérisée en ce que** pour la transmission du déplacement de changement de rapport, en particulier un déplacement rotatif de changement de rapport, à l'intérieur du moyeu, l'élément de transmission, de préférence une douille de transmission (6), est relié à rotation solidaire à la bobine de câble (7), ou encore en ce que les deux forment ensemble un unique composant.

9. Mécanique d'actionnement selon la revendication 3, **caractérisée en ce que** pour transmettre le déplacement de changement de rapport et en particulier un déplacement rotatif de changement de rapport à l'intérieur du moyeu, l'élément de transmission, de préférence une douille de transmission (6), est relié à rotation solidaire à une roue dentée entraînée (16) qui est entraînée par une roue dentée d'entraînement (14) ou par une crémaillère de préférence flexible.

10. Mécanique d'actionnement selon la revendication 9, **caractérisée en ce que** la roue dentée d'entraînement (14) est entraînée par une bobine de câble (7) ou par une énergie extérieure, par exemple un entraînement électrique.

11. Mécanique d'actionnement selon la revendication 8, **caractérisée en ce que** pour la transmission du déplacement de changement de rapport et en particulier d'un déplacement rotatif de changement de rapport, la bobine de câble (7) et la douille de transmission (6) sont reliées au moyen d'un accouplement élastique (11) qui permet le parcours de changement de rapport et qui accumule l'énergie de changement de rapport.

12. Mécanique d'actionnement selon la revendication 11, **caractérisée en ce que** l'accouplement élastique (11) est constitué d'un ressort spiralé qui est serré lorsque la transmission par le moyeu n'est pas prête à un changement de rapport.

13. Mécanique d'actionnement selon la revendication 3, **caractérisée en ce que** la pièce rotative d'actionnement, en particulier la bobine de câble (7), peut être reculée ou renvoyée dans la position de départ au moyen d'un ressort de rappel (13) qui s'appuie sur l'axe (1) ou sur la pièce de support (2).

14. Mécanique d'actionnement selon la revendication 13, **caractérisée en ce que** le ressort de rappel (13) est intégré dans le contour de la bobine de câble ou est disposé latéralement et est configuré comme ressort spiralé ou comme ressort à bras.

15. Mécanique d'actionnement selon la revendication 9, **caractérisée en ce que** la crémaillère qui crée le déplacement de rotation est dotée d'un ressort de retenue qui fait tourner la douille de transmission jusque dans la position de départ dans le sens opposé au sens d'actionnement, le ressort s'appuyant sur la pièce de support (2) ou sur l'axe (1).

16. Mécanique d'actionnement selon la revendication 8, **caractérisée en ce que** l'élément de transmission ou la douille de transmission (6) sont sollicités directement ou indirectement par une précontrainte élastique pour, lors du démontage du dispositif de transmission, ramener ce dernier dans une position définie et en particulier dans sa position de départ.

17. Mécanique d'actionnement selon la revendication 3, **caractérisée en ce qu'**un déplacement rotatif de changement de rapport sur la surface de contact entre une pièce tournante qui présente la forme d'une bobine de câble (7) ou d'une roue dentée entraînée (16) et la douille de transmission (6) à l'intérieur de la pièce de support (2) est converti en un déplacement linéaire, le déplacement linéaire de changement de rapport étant transmis à l'intérieur du moyeu par l'ouverture annulaire (5) prévue entre la bague intérieure (4) et l'axe (1).

18. Mécanique d'actionnement selon la revendication 17, **caractérisée en ce que** la douille de transmission (6) est équipée de cames ou de contours qui s'étendent axialement et qui convertissent le déplacement rotatif de changement de rapport en un déplacement linéaire, ces cames ou contours s'engageant dans des contours correspondants prévus sur la bobine de câble (7) ou sur la roue dentée entraînée (16), la douille de transmission (6) étant disposée à coulissement axial mais sans pouvoir tourner.
